# FASCICULE DE BREVET EUROPEEN

(11) **EP 1 499 866 B1**
(45) Date de publication et mention de la délivrance du brevet: **11.04.2012**
(21) Numéro de dépôt: 03740618.8
(22) Date de dépôt: 16.04.2003
(51) Int. Cl.: G01L 23/18, F02B 77/08, G01L 23/10, G01L 23/22, G01L 23/08

(54) **DISPOSITIF DE MESURE DE PRESSION, NOTAMMENT DANS UNE CHAMBRE DE COMBUSTION D UN MOTEUR A COMBUSTION INTERNE**
DRUCKMESSVORRICHTUNG, INSBESONDERE ZUR DRUCKMESSUNG IM VERBRENNUNGSRAUM EINES INNEREN VERBRENNUNGSMOTORS
DEVICE FOR PRESSURE MEASUREMENT, PARTICULARLY IN A COMBUSTION CHAMBER OF AN INTERNAL COMBUSTION ENGINE

(30) Priorité: 18.04.2002 FR 0204897
(43) Date de publication de la demande: 26.01.2005
(73) Titulaire: Institut Français du Pétrole, 92852 Rueil-Malmaison Cedex (FR); Peugeot Citroën Automobiles SA, 92200 Neuilly sur Seine (FR); Renault s.a.s., 92100 Boulogne Billancourt (FR)
(72) Inventeur: MAZOYER, Thierry, F-01600 Massieux (FR); FAYET, Patrick, 69480 Lachassagne (FR); DUMAS, Jean-Pierre, F-78500 Sartrouville (FR); CASTAGNE, Michel, F-92000 Nanterre (FR)
(86) Numéro de dépôt international: PCT/FR2003/001208
(87) Numéro de publication internationale: WO 2003/087753

(56) Documents cités:
- DE-A- 4 207 495
- DE-A- 4 225 815
- PATENT ABSTRACTS OF JAPAN vol. 014, no. 405 (P-1100), 31 août 1990 (1990-08-31) & JP 02 157629 A (MITSUBISHI MOTORS CORP), 18 juin 1990 (1990-06-18)

## Description

La présente invention se rapporte à un dispositif de mesure d'au moins la pression d'un fluide présent dans une chambre.

Elle concerne plus particulièrement un dispositif pour mesurer la pression dans une chambre de combustion d'un moteur à combustion interne.

Plus spécifiquement, elle est dirigée vers un dispositif permettant de contrôler la combustion et plus particulièrement le cliquetis se produisant dans cette chambre de combustion du moteur.

Il est connu par le document EP 0 472 219, un dispositif de mesure de la pression régnant à l'intérieur d'une chambre de combustion d'un moteur à combustion interne.

Ce dispositif comprend un joint d'étanchéité interposé entre la culasse de ce moteur et le bloc moteur en étant en contact étanche avec les faces respectives de cette culasse et de ce bloc moteur. Le joint d'étanchéité, de type multi feuilles, comporte une feuille métallique supérieure et une feuille métallique inférieure entre lesquelles est placée une feuille intermédiaire qui porte un logement de réception d'un élément sensible à la pression.

Pour mesurer la pression régnant dans la chambre de combustion, il est prévu une entrée de pression qui amène la pression vers une surface de mesure disposée parallèlement à la face de la culasse ou à la face du bloc moteur.

Ce dispositif de mesure présente des inconvénients non négligeables.

En effet, l'entrée de pression peut être obstruée, ou pour le moins diminuée de section, par un dépôt de coke que génère habituellement la combustion. La transmission du fluide sous pression de la chambre de combustion vers la surface de mesure risque donc d'être inexistante voire fortement perturbée.

En outre, il est nécessaire, soit d'utiliser un joint de forte épaisseur pour pouvoir pratiquer le logement de réception de l'élément sensible et l'entrée de mesure, ce qui nécessite un aménagement de l'ensemble culasse, bloc moteur et piston, soit de prévoir des usinages au niveau de la culasse en la fragilisant et en risquant d'entraîner une perte d'étanchéité au niveau de ces usinages ou pour le moins de nécessiter une étanchéité supplémentaire à ce niveau.

Enfin, la présence d'une telle entrée de pression modifie le niveau, la forme, la fréquence et la phase de l'onde de pression venant de la chambre de combustion.

Il est également connu par DE 4 207 495 un joint de culasse comprenant un logement de réception d'un élément sensible formé entre une âme métallique de ce joint et des feuilles souples disposées de par et d'autre de cet âme. Après la mise en place de cet élément sensible, une bordure en forme de U couché vient fermer ce logement.

Cette configuration de joint a pour inconvénient majeur de perturber la transmission de la mesure de pression venant de la chambre de combustion, car il peut subsister une espace libre entre élément sensible et la bordure ou entre l'élément sensible et une des feuilles souples.

La présente invention se propose de remédier aux inconvénients mentionnés ci-dessus en disposant d'un dispositif de mesure de concept simple, de coût relativement bas, et d'une quasi-sécurité quant à la mesure.

A cet effet, la présente invention propose un dispositif de mesure d'au moins la pression d'un fluide présent dans une chambre délimitée par au moins une paroi, ledit dispositif comprenant un élément sensible placé dans un logement ouvert en direction de cette chambre et porté par un joint interposé entre deux éléments formant ladite chambre, caractérisé en ce que l'élément sensible est placé dans le logement de manière à ce qu'il soit en retrait par rapport à la paroi de la chambre et à ce que ses faces soient à distance des parois du logement, et en ce que l'élément sensible est enrobé d'une matière remplissant ledit logement.

Le joint peut comprendre un empilage de deux feuilles extrêmes entre lesquelles est disposée une multiplicité de feuilles intermédiaires et le logement peut être délimité par lesdites feuilles, extrêmes et au moins une feuille intermédiaire.

Au moins une feuille intermédiaire peut comporter une découpe ouverte en direction de la chambre.

Au moins une feuille intermédiaire peut comprendre des moyens de connexions électriques entre l'élément sensible et un moyen-de mesure.

Les moyens de connexions électriques peuvent être portés par une feuille intermédiaire sous forme d'un film sur lequel peut être formé un circuit imprimé comprenant au moins un conducteur électrique entre l'élément sensible et le moyen de mesure.

Les feuilles peuvent être isolées électriquement les unes des autres par au moins une feuille sous forme de plaque, couche ou dépôt isolant.

Deux des faces verticales opposées de l'élément sensible peuvent être raccordées aux moyens de connexions électriques.

Deux des faces horizontales opposées de l'élément sensible peuvent être raccordées aux moyens de connexions électriques.

L'élément sensible peut être relié aux moyens de connexions électriques par une colle conductrice.

L'élément sensible peut être relié aux moyens de connexions électriques par au moins un élément conducteur.

Les feuilles peuvent être liées les unes aux autres par collage et ce collage peut être est réalisé par interposition d'une couche de colle.

Au moins les feuilles extrêmes peuvent être métalliques et au moins la feuille centrale des feuilles intermédiaires peut également être métallique.

La matière remplissant le logement peut être une résine résistant aux hautes températures.

La face du logement en direction de la chambre peut être recouverte par un élément de protection.

L'élément de protection peut comprendre une paroi recouvrant ladite face et les extrémités de ladite paroi peuvent être repliées sur les feuilles extrêmes du joint.

L'élément sensible peut être de type piézoélectrique ou piézorésistif.

Le joint peut être un joint de culasse disposé entre la culasse et le bloc moteur d'un moteur à combustion interne.

Le joint peut comprendre un élément sensible à la température.

La présente invention peut être appliquée à la mesure, la détection ou l'analyse du cliquetis dans la chambre de combustion d'un moteur à combustion interne.

L'invention peut être également appliquée à la caractérisation de la combustion dans au moins une chambre de combustion d'un moteur à combustion interne.

Cette invention peut aussi être appliquée à la localisation du cliquetis dans la chambre de combustion d'un moteur à combustion interne.

Les autres avantages de l'invention vont apparaître à la lecture de la description qui va suivre, donnée uniquement à titre d'exemple, et en se référant aux figures annexées sur lesquelles :
- la figure 1 est une vue schématique en coupe partielle, à grande échelle, d'un dispositif de mesure selon l'invention ;
- la figure 2 est une vue schématique en coupe partielle selon la ligne 2-2 de la-figure 1 avec une coupe en section locale selon la ligne 2a-2a de la même figure ;
- la figure 3 est une variante de la figure 1 ;
- la figure 4 est une autre variante de réalisation de la figure 1 ;
- la figure 5 est une autre variante de l'invention et
- la figure 6 est encore une autre variante de l'invention.

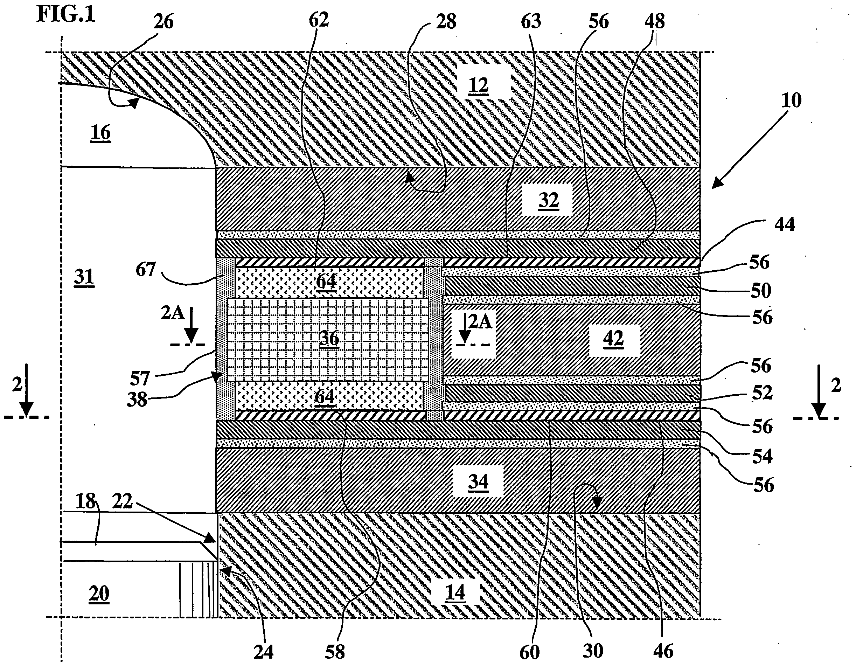

La figure 1 montre un dispositif de mesure de la pression d'un fluide présent dans une chambre.

Plus précisément et en se rapportant à la suite de la description, qui n'est donné qu'à titre d'exemple, la pression mesurée est la pression résultant de la combustion d'un mélange carburé dans une chambre de combustion d'un moteur à combustion interne.

Bien entendu tout autre paramètre du fluide, tel que sa température, peut être mesuré par le dispositif selon l'invention.

En se rapportant à la figure 1, le dispositif de mesure comprend un joint d'étanchéité 10 intercalé entre un premier élément comme une culasse 12 et deuxième élément comme un bloc moteur 14 d'un moteur à combustion interne dont la chambre de combustion 16 est délimitée par la face supérieure 18 d'un piston 20, la paroi circulaire 22 d'un cylindre 24 disposé dans le bloc moteur 14 et la cavité 26 de la culasse 12 en regard du piston 20.

Ce joint, dénommé communément joint de culasse, est habituellement utilisé principalement pour empêcher les fuites entre les faces en regard 28, 30 respectivement de la culasse 12 et du bloc moteur 14 et comporte principalement des ouvertures circulaires 31 de même dimension diamétrale que les chambres de combustion 16 et en correspondance avec celles-ci.

Le joint 10 est un joint sous la forme d'un empilage de feuilles, de couches, de plaques, de lames ou de films les uns sur les autres comportant chacune et chacun au moins une ouverture circulaire formant l'ouverture 31 du joint. Il comprend une feuille extrême supérieure 32 et une feuille extrême inférieure 34 disposée- à distance de la feuille supérieure, ces feuilles étant de préférence rigides et métalliques, avantageusement en acier, et s'étendant sur la superficie de la face 28 de la culasse 12 et de la face 30 du bloc moteur 14.

Entre ces deux feuilles est logé au moins un élément sensible 36, de préférence un élément sensible à la pression et avantageusement au nombre minimum de quatre, qui a pour objet de mesurer la pression régnant dans la chambre de combustion 16.

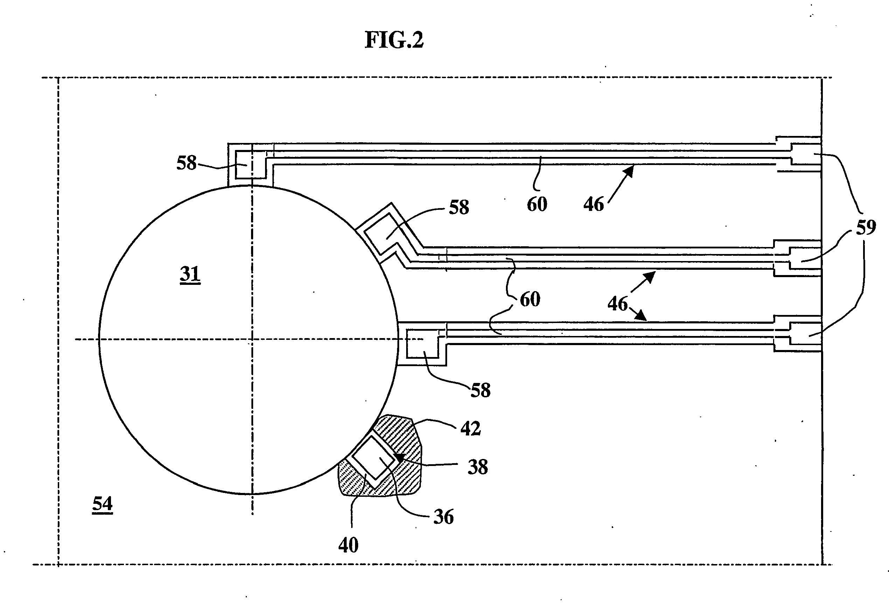

Pour ce faire, il est prévu, entre les feuilles extrêmes, un logement de réception 38 pour chaque élément sensible. Ce logement est formé par une découpe 40 avec une face ouverte, par exemple une découpe en forme de U couché, prévue dans une multiplicité de feuilles intermédiaires. Ce logement est disposé de façon à ce que sa face ouverte soit dirigée vers la chambre de combustion 16 (voir figure 2).

Les feuilles intermédiaires comprennent une feuille intermédiaire centrale 42, de préférence rigide et métallique et avantageusement en acier, de même étendue que lesdites feuilles extrêmes et comportant une découpe 40 en U couché et des feuilles, plaques ou couches intermédiaires additionnelles disposées entre les feuilles extrêmes 32 et 34 et la feuille centrale 42. Une partie de ces feuilles additionnelles comportent également une découpe en U de manière à réaliser le logement 38 lors de l'empilage de cette partie de feuilles additionnelles et de la feuille centrale.

Deux de ces feuilles intermédiaires additionnelles sont formées par des films 48, 54 portant des circuits électriques 44 et 46, de préférence en regard de l'élément sensible 36, permettant de connecter cet élément sensible à un moyen de mesure externe comprenant un circuit d'alimentation ou de polarisation ou d'amplification ou de conditionnement (non représenté) de l'élément sensible. L'un 48 de ces films est situé entre la feuille supérieure 32 et la feuille centrale 42 et l'autre 54 entre cette feuille centrale 42 et la feuille inférieure 34.

Avantageusement, ces circuits sont isolés électriquement des feuilles 32, 34, et 42 par d'autres feuilles intermédiaires additionnelles sous forme de plaques isolantes qui sont disposées de part et d'autre de ces circuits électriques.

Les isolations électriques peuvent également être obtenues par le dépôt d'un isolant sur les circuits électriques, tel qu'un dépôt d'une couche de vernis ou de peinture sur ces circuits. Cette isolation peut aussi être obtenue par un traitement de surface isolant, tel qu'une anodisation, qui créé une couche superficielle isolante sur les circuits électriques.

Comme visible sur la figure 1, une plaque isolante 50 est disposée entre le circuit 44 porté par le film 48 et la feuille centrale 42, en étant de même étendue que la feuille centrale 42 et présente une découpe identique à celle de cette feuille centrale. De même, une plaque isolante 52 identique à la plaque 50 est placée entre la feuille centrale 42 et le circuit électrique 46 porté par le film 54. lets feuilles, plaques et films sont liés entre eux de manière inamovible, de préférence par des couches de colle 56, de manière avantageuse par des couches de colle isolante.

Ainsi le logement 38 résulte de l'empilage des feuilles et plaques et est formé par les découpes 40 en U prévues dans la feuille centrale 42 et les plaques 50 et 52 en comportant une face verticale ouverte 57 vers la chambre de combustion. Ce logement comprend donc deux parois horizontales formées par les feuilles extrêmes 32, 34 et les feuilles intermédiaires 48, 54 ainsi que trois parois verticales résultant des découpes en U dans la feuille centrale 42 et les plaques isolantes 50, 52.

Les circuits électriques sont réalisés sous forme de circuit imprimé et peuvent être produits par la technologie de type connectique par film sérigraphié comme montré par la figure 2.

En se rapportant à cette figure, chaque circuit 46 prévu sur le film 54 comprend un plot de connexion 58 situé dans le logement 38 au droit de l'élément sensible 36 et en regard de celui-ci, une fiche de connexion 59 disposée sur le bord du joint de culasse et à laquelle est connecté le moyen de mesure externe, et un conducteur 60 reliant le plot à la fiche.

Bien entendu, chaque circuit 44 prévu sur le film 48 est configuré de la même façon et est réalisé par la même technologie que les circuits du film 54 et comprend donc un plot 62, une fiche-de connexion et un conducteur 63.

L'élément sensible 36, qui est un élément sensible de faible épaisseur, possède une sensibilité de quelques dixième de bar, supporte les pressions et températures maximales régnant dans les chambres de combustion de moteurs et résiste aux agressions chimiques, telles que celles des gaz générés par la combustion.

Avantageusement, cet élément sensible est un élément sensible de type piézoélectrique ou piézorésistif.

En revenant à la figure 1, l'élément sensible 36 est placé dans le logement 38 de manière à ce que, d'une part, il soit légèrement en retrait par rapport à la surface du cylindre 24 et, d'autre part, aucune de ses faces verticales, par rapport au plan des feuilles extrêmes, ne prenne appui sur l'une quelconque des faces verticales du logement 38.

Préférentiellement, cet élément sensible est relié électriquement par tous moyens aux plots 58, 62 par deux de ses faces horizontales opposées.

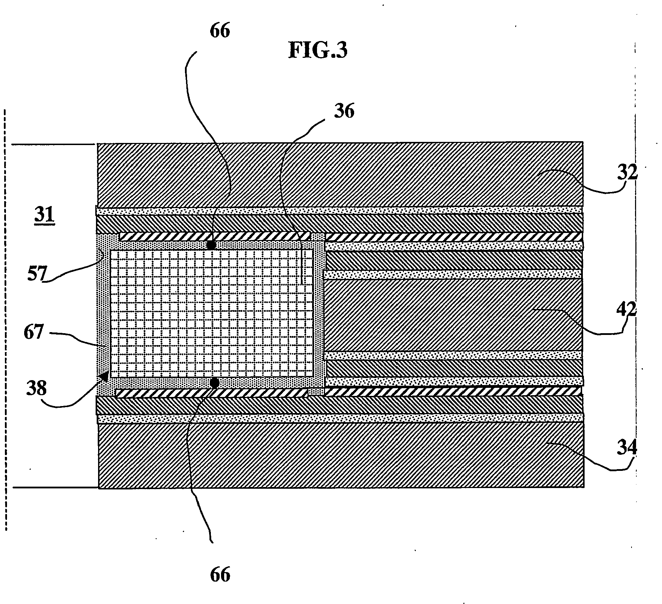

Cette liaison électrique peut être effectuée par collage, tel qu'une colle conductrice 64, comme montré sur la figure 1, ou par l'interposition entre la ou les faces de l'élément sensible et le ou les plots d'au moins un élément cylindrique conducteur 66 comme illustré à la figure 3.

Une fois la mise en place de l'élément sensible et les connexions réalisées, l'élément sensible est enrobé d'une matière 67 de façon à remplir la totalité du logement 38. Cette mise en oeuvre permet de réaliser l'étanchéité de l'élément sensible vis à vis de la chambre de combustion, la protection de cet élément sensible contre les agressions chimiques et thermiques dues à la combustion et la bonne transmission des ondes de pression, notamment aux hautes fréquences. Cette matière affleure la surface du cylindre 24 sur la face ouverte 57 de ce logement.

La matière d'enrobage utilisée est préférentiellement une résine résistant à de hautes températures.

Ainsi, la pression régnant dans la chambre de combustion est retransmise aux faces de l'élément sensible qui se déforme en générant une tension, ou une variation de tension, transmise au moyen de mesure externe par les circuits électriques 44 et 46, via les faces horizontales de cet élément sensible, la colle conductrice et/ou l'élément cylindrique conducteur.

De ce fait, l'élément sensible mesure la pression ou le régime de pression en temps réel qui règne dans la chambre de combustion à proximité de l'élément sensible.

En outre, le joint réalisé a l'avantage d'être un joint de très faible épaisseur, épaisseur comprise entre 0,5 et 1,5 mm, avantageusement entre 0,8 et 1 mm et préférentiellement de 1 mm.

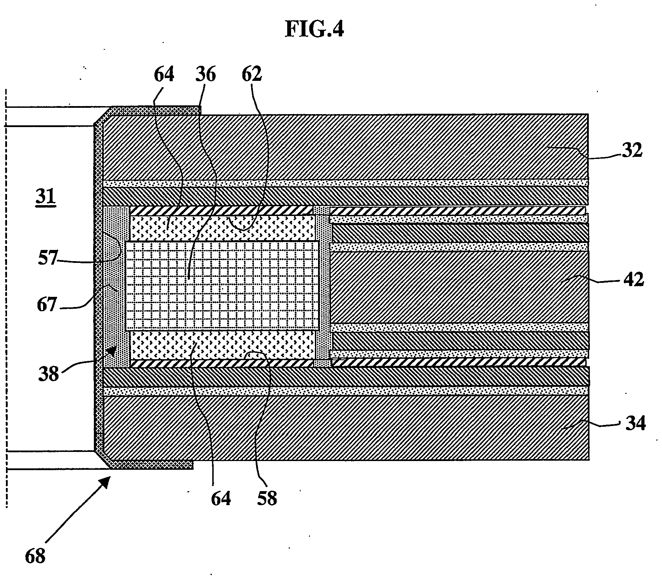

Avantageusement et en se référant à la figure 4, il peut être prévu que le bord périphérique de l'ouverture 31 et par conséquent la face ouverte 57 du logement 38 soit recouverte par un élément protecteur 68 qui protége l'élément sensible 36 et les connexions électriques des hautes températures régnant dans la chambre de combustion et assure également l'étanchéité de l'empilage de feuilles aux gaz de combustion.

Cet élément protecteur, baptisé pare feu, est un anneau qui présente une section en U dont la base du U prend appui sur toute la tranche périphérique de l'ouverture 31 en recouvrant la face ouverte 57 de chaque logement et dont les barres de U s'appuient respectivement sur la feuille supérieure 32 et la feuille inférieure 34.

Ce pare feu est avantageusement en métal cuivreux ou en tout autre métal permettant un formage facile et ayant une faible rigidité de manière à de ne pas gêner la transmission de l'onde de pression à l'élément sensible.

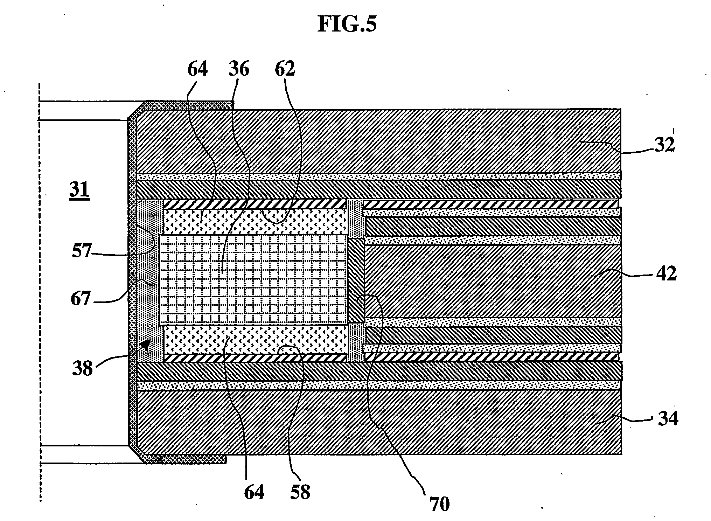

En se rapportant maintenant à la figure 5, qui montre une variante de l'invention et qui pour cela comporte les mêmes références que celles de la figure 1, l'élément sensible 36 est placé dans le logement de réception 38 de manière à ce que la face verticale arrière de cet élément soit en appui par l'intermédiaire d'une plaquette isolante 70 sur la tranche de la feuille centrale 42. Par face arrière, il est entendu la face de l'élément sensible opposée à celle en regard de la chambre de combustion.

Dans ce cas, les connexions électriques entre les faces horizontales de l'élément sensible 36 et les plots 58 et 62 sont réalisées, comme décrit précédemment en relation avec la figure 1, par une colle conductrice 64 ou par au moins un élément cylindrique conducteur, comme montré par la figure 3.

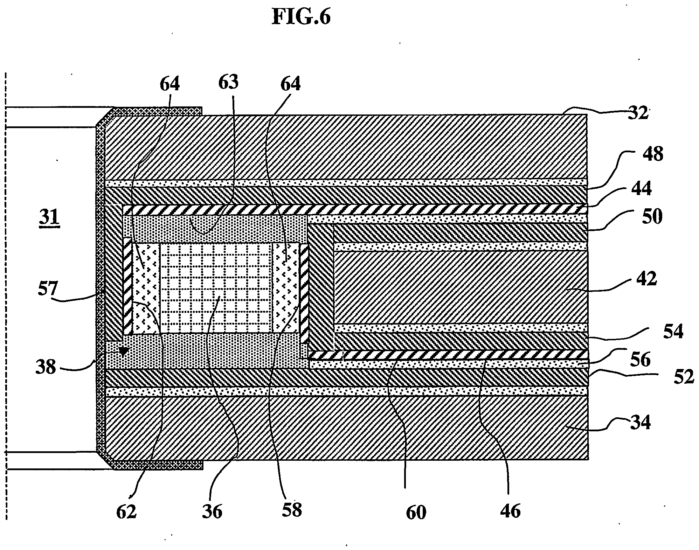

La figure 6 montre une autre variante pour le montage de l'élément sensible 36 dans le logement 38.

Dans cette variante, les faces de l'élément sensible 36 reliées aux plots 58 et 62 sont deux faces verticales opposées et situées dans le prolongement de la face ouverte 57 du logement 38.

Pour assurer les connexions électriques, toujours opposées, les plots 58 et 62 sont orthogonaux par rapport aux conducteurs 60 et 63 et sont reliés aux faces verticales de l'élément sensible par une colle conductrice 64.

Dans l'exemple de cette figure, la feuille intermédiaire sous forme de film 48 portant le circuit électrique 44 est située au même endroit que celui décrit en relation avec la figure 1 et comporte une partie orthogonale, à proximité de la face ouverte 57 tout en faisant face à l'élément sensible 36, et portant le plot de connexion 62. Dans ce cas, une plaque isolante 50 est disposée entre le circuit 44 porté par la feuille intermédiaire 48 et la feuille centrale 42, en étant de même étendue que la feuille centrale 42 et présente une découpe identique à celle de cette feuille centrale.

La feuille intermédiaire 54 portant les circuits électriques 46 est également disposée entre la feuille intermédiaire centrale 42 et la feuille extrême inférieure et comporte une partie orthogonale, située à distance de la partie orthogonale du film 48 et au voisinage de la tranche de la feuille intermédiaire 42, tout en faisant face à l'élément sensible 36 et en portant le plot de connexion 58. La plaque isolante 52 est placée, dans cette configuration de joint, entre le circuit 46 porté par la feuille intermédiaire 54 et la feuille extrême inférieure 34.

Bien entendu et comme cela à été précédemment décrit, les feuilles, les plaques et les films sont liés entre eux de manière inamovible, de préférence par des couches de colle 56.

La présente invention trouve également son application dans de nombreux domaines telles que la mesure de la pression associée à celle de la température d'un fluide sous forme gazeuse ou liquide présent dans une chambre.

Dans le cas de la mesure d'une pression, son application peut être principalement dirigée vers la caractérisation et le contrôle de la combustion normale, tels que l'évaluation de pression moyenne indiquée (PMI) ou la pression maximale du cylindre, ou vers la caractérisation et le contrôle de la combustion anormale.

Une application toute particulière consiste en la détection et l'analyse du cliquetis, ou sa localisation comme mieux décrit dans la demande de brevet français N° 00/14.085 déposée le 31.10.2000 et publiée sous le numéro 2 816 052.

La présente invention n'est pas limitée aux exemples décrits ci-dessus mais englobe toutes variantes équivalentes.

Notamment, l'élément sensible peut être d'un autre type comme un élément sensible à élément semi-conducteur.

## Revendications

1. Dispositif de mesure d'au moins la pression d'un fluide présent dans une chambre (16) délimitée par au moins une paroi (22), ledit dispositif comprenant un élément sensible (36) placé dans un logement (38) ouvert en direction de cette chambre (16) et porté par un joint (10) interposé entre deux éléments (12, 14) formant ladite chambre, **caractérisé en ce que** l'élément sensible (36) est placé dans le logement de manière à ce qu'il soit en retrait par rapport à l'ouverture (57) dudit logement et à ce que ses faces soient à distance des parois du logement, et **en ce que** l'élément sensible est enrobé d'une matière (67) remplissant ledit logement.

2. Dispositif de mesure selon la revendication 1, **caractérisé en ce que** le joint (10) comprend un empilage de deux feuilles extrêmes (32, 34) entre lesquelles est disposée une multiplicité de feuilles intermédiaires (42, 48, 50, 52, 54) et **en ce que** le logement (38) est délimité par lesdites feuilles extrêmes et au moins une feuille intermédiaire.

3. Dispositif de mesure selon la revendication 2, **caractérisé en ce qu'**au moins une feuille intermédiaire comporte une découpe (40) ouverte en direction de la chambre (16).

4. Dispositif de mesure selon la revendication 2 ou 3, **caractérisé en ce qu'**au moins une feuille intermédiaire (48, 54) comprend des moyens de connexions électriques (58, 59, 60) entre l'élément sensible (36) et un moyen de mesure.

5. Dispositif de mesure selon la revendication 4, **caractérisé en ce que** les moyens de connexions électriques (58, 59, 60) sont portés par une feuille intermédiaire sous forme d'un film (48, 54) sur lequel est formé un circuit imprimé comprenant au moins un conducteur électrique (60, 63) entre l'élément sensible (36) et le moyen de mesure.

6. Dispositif de mesure selon l'une des revendications 2 à 5, **caractérisé en ce que** les feuilles sont isolées électriquement les unes des autres par au moins une feuille sous forme de plaque, couche ou dépôt isolant (50, 52).

7. Dispositif de mesure selon l'une des revendications 4 ou 5, **caractérisé en ce que** deux des faces verticales opposées de l'élément sensible (36) sont raccordées aux moyens de connexions électriques.

8. Dispositif de mesure selon l'une des revendications 4 ou 5, **caractérisé en ce que** deux des faces horizontales opposées de l'élément sensible (36) sont raccordées aux moyens de connexions électriques.

9. Dispositif de mesure selon l'une des revendications 4 à 8, **caractérisé en ce que** l'élément sensible (36) est relié aux moyens de connexions électriques par une colle conductrice (64).

10. Dispositif de mesure selon l'une des revendications 4 à 9, **caractérisé en ce que** l'élément sensible (36) est relié aux moyens de connexions électriques par au moins un élément conducteur (66).

11. Dispositif de mesure selon l'une des revendications 2 à 6, **caractérisé en ce que** les feuilles sont liées les unes aux autres par collage.

12. Dispositif de mesure selon la revendication 11, **caractérisé en ce que** le collage est réalisé par interposition d'une couche de colle (56).

13. Dispositif de mesure selon la revendication 2, **caractérisé en ce qu'**au moins les feuilles extrêmes (32, 34) sont métalliques.

14. Dispositif de mesure selon la revendication 2 à 6, **caractérisé en ce qu'**au moins la feuille centrale (42) des feuilles intermédiaires est métallique.

15. Dispositif de mesure selon la revendication 1, **caractérisé en ce que** la matière (67) remplissant le logement (38) est une résine résistant aux hautes températures.

16. Dispositif de mesure selon l'une des revendications 1 à 3, **caractérisé en ce que** la face (57) du logement en direction de la chambre est recouverte par un élément de protection (68).

17. Dispositif de mesure selon la revendication 16, **caractérisé en ce que** l'élément de protection (68) comprend une paroi recouvrant la face (57) et **en ce que** les extrémités de ladite paroi sont repliées sur les feuilles extrêmes (32, 34) du joint.

18. Dispositif de mesure selon la revendication 1, **caractérisé en ce que** l'élément sensible (36) est de type piézoélectrique ou piézorésistif.

19. Dispositif de mesure selon l'une des revendications précédentes, **caractérisé en ce que** le joint (10) est un joint de culasse disposé entre la culasse (12) et le bloc moteur (14) d'un moteur à combustion interne.

20. Dispositif de mesure selon la revendication 1, **caractérisé en ce que** le joint comprend un élément sensible à la température.

21. Application d'au moins un dispositif de mesure selon l'une des revendications 1 à 19 à la mesure, la détection ou l'analyse du cliquetis dans la chambre de combustion d'un moteur à combustion interne.

22. Application d'au moins un dispositif de mesure selon l'une des revendications 1 à 19 à la caractérisation de la combustion dans au moins une chambre de combustion d'un moteur à combustion interne.

23. Application d'au moins un dispositif de mesure selon l'une des revendications 1 à 19 à la localisation du cliquetis dans la chambre de combustion d'un moteur à combustion interne.

## Claims

1. A device for measuring at least the pressure of a fluid present in a chamber (16) delimited by at least one wall (22), said device comprising a sensitive member (36) situated in a housing (38) which is open in the direction of this chamber (16) and borne by a gasket (10) interposed between two members (12, 14) which form said chamber, **characterised in that** the sensitive member (36) is situated in the housing such that it is recessed with respect to the opening (57) of said housing and such that its faces are spaced apart from the walls of the housing, and **in that** the sensitive member is encased in a substance (67) which fills said housing.

2. The measuring device according to claim 1, **characterised in that** the gasket (10) comprises a stack of two end sheets (32, 34) between which there are arranged a plurality of intermediate sheets (42, 48, 50, 52, 54) and **in that** the housing (38) is delimited by said end sheets and at least one intermediate sheet.

3. The measuring device according to claim 2, **characterised in that** at least one intermediate sheet comprises a cut-out (40) which is open in the direction of the chamber (16).

4. The measuring device according to claim 2 or 3, **characterised in that** at least one intermediate sheet (48, 54) comprises electrical connection means (58, 59, 60) between the sensitive member (36) and a measuring means.

5. The measuring device according to claim 4, **characterised in that** the electrical connection means (58, 59, 60) are borne by an intermediate sheet in the form of a film (48, 54) on which there is formed a printed circuit comprising at least one electrical conductor (60, 63) between the sensitive member (36) and the measuring means.

6. The measuring device according to one of claims 2 to 5, **characterised in that** the sheets are electrically insulated from one another by at least one sheet in the form of an insulating plate, layer or deposit (50, 52).

7. The measuring device according to one of claims 4 or 5, **characterised in that** two of the opposing vertical faces of the sensitive member (36) are connected to the electrical connection means.

8. The measuring device according to one of claims 4 or 5, **characterised in that** two of the opposing horizontal faces of the sensitive member (36) are connected to the electrical connection means.

9. The measuring device according to one of claims 4 to 8, **characterised in that** the sensitive member (36) is linked to the electrical connection means by a conductive glue (64).

10. The measuring device according to one of claims 4 to 9, **characterised in that** the sensitive member (36) is linked to the electrical connection means by at least one conductive member (66).

11. The measuring device according to one of claims 2 to 6, **characterised in that** the sheets are linked to one another by gluing.

12. The measuring device according to claim 11, **characterised in that** the gluing is achieved by interposing at least one layer of glue (56).

13. The measuring device according to claim 2, **characterised in that** at least the end sheets (32, 34) are metallic.

14. The measuring device according to claim 2 to 6, **characterised in that** at least the central sheet (42) of the intermediate sheets is metallic.

15. The measuring device according to claim 1, **characterised in that** the substance (67) filling the housing (38) is a resin which is resistant to high temperatures.

16. The measuring device according to one of claims 1 to 3, **characterised in that** the face (57) of the housing in the direction of the chamber is covered by a protective member (68).

17. The measuring device according to claim 16, **characterised in that** the protective member (68) comprises a wall covering the face (57) and **in that** the ends of said wall are folded back on the end sheets (32, 34) of the gasket.

18. The measuring device according to claim 1, **characterised in that** the sensitive member (36) is piezoelectric or piezoresistive.

19. The measuring device according to one of the preceding claims, **characterised in that** the gasket (10) is a cylinder head gasket arranged between the cylinder head (12) and the engine block (14) of an internal combustion engine.

20. The measuring device according to claim 1, **characterised in that** the gasket comprises a temperature-sensitive member.

21. Application of at least one measuring device according to one of claims 1 to 19 to measure, detect or analyse the pinking in the combustion chamber of an internal combustion engine.

22. The application of at least one measuring device according to one of claims 1 to 19 to characterise the combustion in at least one combustion chamber of an internal combustion engine.

23. The application of at least one measuring device according to one of claims 1 to 19 to locate the pinking in the combustion chamber of an internal combustion engine.

## Patentansprüche

1. Messvorrichtung zur Messung mindestens des Druckes eines Fluids, das in einer von mindestens einer Wand (22) begrenzten Kammer (16) vorhanden ist, wobei die Vorrichtung ein Sensorelement (36) umfasst, das in einer in Richtung dieser Kammer (16) offenen Aufnahme (38) angeordnet ist und von einer Dichtung (10) getragen wird, die zwischen zwei die Kammer bildenden Elementen (12, 14) angeordnet ist, **dadurch gekennzeichnet, dass** das Sensorelement (36) derart in der Aufnahme angeordnet ist, dass es bezüglich der Öffnung (57) der Aufnahme zurückversetzt ist und dass sich seine Seiten in einem Abstand von den Wänden der Aufnahme befinden, und dadurch, dass das Sensorelement von einem Material (67) umhüllt ist, das die Aufnahme ausfüllt.

2. Messvorrichtung nach Anspruch 1, **dadurch gekennzeichnet, dass** die Dichtung (10) einen Stapel aus zwei Endlagen (32, 34) umfasst, zwischen denen mehrere Zwischenlagen (42, 48, 50, 52, 54) angeordnet sind, und dadurch, dass die Aufnahme (38) von den Endlagen und mindestens einer Zwischenlage begrenzt wird.

3. Messvorrichtung nach Anspruch 2, **dadurch gekennzeichnet, dass** mindestens eine Zwischenlage einen Ausschnitt (40) aufweist, der in Richtung der Kammer (16) offen ist.

4. Messvorrichtung nach Anspruch 2 oder 3, **dadurch gekennzeichnet, dass** mindestens eine Zwischenlage (48, 54) elektrische Verbindungsmittel (58, 59, 60) zur Verbindung zwischen dem Sensorelement (38) und einem Messmittel umfasst.

5. Messvorrichtung nach Anspruch 4, **dadurch gekennzeichnet, dass** die elektrischen Verbindungsmittel (58, 59, 60) von einer Zwischenlage in Form einer Folie (48, 54) getragen werden, auf der eine gedruckte Schaltung ausgebildet ist, die mindestens einen elektrischen Leiter(60, 63) zwischen dem Sensorelement (36) und dem Messmittel umfasst.

6. Messvorrichtung nach einem der Ansprüche 2 bis 5, **dadurch gekennzeichnet, dass** die Lagen durch mindestens eine Lage in Form einer isolierenden Platte, Schicht oder Ablagerung (50, 52) elektrisch voneinander isoliert sind.

7. Messvorrichtung nach einem der Ansprüche 4 oder 5, **dadurch gekennzeichnet, dass** zwei der gegenüberliegenden vertikalen Seiten des Sensorelements (38) an die elektrischen Verbindungsmittel angeschlossen sind.

8. Messvorrichtung nach einem der Ansprüche 4 oder 5, **dadurch gekennzeichnet, dass** zwei der gegenüberliegenden horizontalen Seiten des Sensorelements (38) an die elektrischen Verbindungsmittel angeschlossen sind.

9. Messvorrichtung nach einem der Ansprüche 4 bis 8, **dadurch gekennzeichnet, dass** das Sensorelement (36) mit den elektrischen Verbindungsmitteln durch einen leitfähigen Kleber (64) verbunden ist.

10. Messvorrichtung nach einem der Ansprüche 4 bis 9, **dadurch gekennzeichnet, dass** das Sensorelement (36) mit den elektrischen Verbindungsmitteln durch mindestens ein leitendes Element (66) verbunden ist.

11. Messvorrichtung nach einem der Ansprüche 2 bis 6, **dadurch gekennzeichnet, dass** die Lagen durch Kleben miteinander verbunden sind.

12. Messvorrichtung nach Anspruch 11, **dadurch gekennzeichnet, dass** das Kleben durch Einfügung einer Klebstoffschicht (56) durchgeführt wird.

13. Messvorrichtung nach Anspruch 2, **dadurch gekennzeichnet, dass** mindestens die Endlagen (32, 34) aus Metall bestehen.

14. Messvorrichtung nach Anspruch 2 bis 6, **dadurch gekennzeichnet, dass** mindestens die mittlere Lage (42) der Zwischenlagen aus Metall besteht.

15. Messvorrichtung nach Anspruch 1, **dadurch gekennzeichnet, dass** das Material (67), das die Aufnahme (38) ausfüllt, ein hochtemperaturbeständiges Harz ist.

16. Messvorrichtung nach einem der Ansprüche 1 bis 3, **dadurch gekennzeichnet, dass** die Seite (57) der Aufnahme in Richtung der Kammer mit einem Schutzelement (68) bedeckt ist.

17. Messvorrichtung nach Anspruch 16, **dadurch gekennzeichnet, dass** das Schutzelement (88) eine die Seite (57) bedeckende Wand umfasst, und dadurch, dass die Enden der Wand auf die Endlagen (32, 34) der Dichtung umgebogen sind.

18. Messvorrichtung nach Anspruch 1, **dadurch gekennzeichnet, dass** das Sensorelement (36) vom piezoelektrischen oder piezoresistiven Typ ist.

19. Messvorrichtung nach einem der vorhergehenden Ansprüche, **dadurch gekennzeichnet, dass** die Dichtung (10) eine Zylinderkopfdichtung ist, die zwischen dem Zylinderkopf (12) und dem Motorblock (14) eines Verbrennungsmotors angeordnet ist.

20. Messvorrichtung nach Anspruch 1, **dadurch gekennzeichnet, dass** die Dichtung ein temperaturempfindliches Element umfasst.

21. Anwendung mindestens einer Messvorrichtung nach einem der Ansprüche 1 bis 19 zur Messung, zur Detektion oder zur Analyse des Klopfens in der Verbrennungskammer eines Verbrennungsmotors.

22. Anwendung mindestens einer Messvorrichtung nach einem der Ansprüche 1 bis 19 zur Charakterisierung der Verbrennung in mindestens einer Verbrennungskammer eines Verbrennungsmotors.

23. Anwendung mindestens einer Messvorrichtung nach einem der Ansprüche 1 bis 19 zur Lokalisierung des Klopfens in der Verbrennungskammer eines Verbrennungsmotors.
